**Europäisches Patentamt**

**European Patent Office**

**Office européen des brevets**

(11) Publication number: **0 149 827 B1**

# EUROPEAN PATENT SPECIFICATION

(45) Date of publication of patent specification: **13.03.91**  (51) Int. Cl.⁵: **C08F 297/08, C08L 53/00**

(21) Application number: **84115873.6**

(22) Date of filing: **19.12.84**

(54) **Impact-resistant ethylene-propylene block copolymer and process for preparing such a block copolymer.**

(30) Priority: **24.12.83 NL 8304438**

(43) Date of publication of application:
**31.07.85 Bulletin 85/31**

(45) Publication of the grant of the patent:
**13.03.91 Bulletin 91/11**

(84) Designated Contracting States:
**AT BE DE FR GB IT NL SE**

(56) References cited:
**EP-A- 0 077 532**
**EP-A-00 948 18**
**FR-A- 2 377 432**
**GB-A- 970 478**
**LU-A- 58 434**

**CHEMICAL ABSTRACTS, vol. 79, page 55, no. 54505t, Columbus, Ohio, US**

**CHEMICAL ABSTRACTS, vol. 83, no. 16, 16th October 1975, page 28, no. 132315e, Columbus, Ohio, US**

(73) Proprietor: **STAMICARBON B.V.**
**Mijnweg 1**
**NL-6167 AC Geleen(NL)**

(72) Inventor: **Repin, Johannes Fredericus**
**Klingbemden 177**
**NL-6441 KX Brunssum(NL)**
Inventor: **Kisters, Mathijs Joseph M.G.**
**Molenweg 52**
**NL-6133 XN Sittard(NL)**

## Description

The invention relates to an impact-resistant ethylene-propylene block copolymer (C), comprising a homopolymeric propylene part, consisting of at least 98% (wt) of propylene groups and a copolymeric ethylene-propylene part, the weight ratio between the homopolymeric propylene part and the copolymeric ethylene-propylene part being from 4 : 1 to 9 : 1, which contains a total amount of 10 - 15 % (wt) ethylene groups, characterized in that its Izod value measured according to ISO-R-180 at 296 K is at least 30 kJ/m$^2$, preferably at least 40 kJ/m$^2$ and in particular at least 50 kJ/m$^2$, for instance 50-100 kJ/m$^2$, in that its E-modulus measured according to ASTM-D-790 at 296 K is at least 1000 N/mm$^2$, preferably at least 1100 N/mm$^2$ and in particular at least 1200 N/mm$^2$, for instance 1250-1500 N/mm$^2$, and in that its melt index measured according to ASTM-D-1238 at 503 K and 21.6 N is 2.5-20 dg/min, preferably 2.5-10 dg/min, particularly 2.5-8 dg/min.

The ethylene content is measured by means of IR analysis of the polymer in melted condition. The Izod value is measured on an injection-moulded test sheet and the E-modulus on a compression-moulded test sheet with a thickness of 1.6 mm.

An at least almost completely homopolymeric propylene part is understood to mean in this connection a part of the block copolymer consisting of at least 98 % (wt) of propylene groups. A copolymeric ethylene-propylene part is understood in this connection to mean a part of the block copolymer consisting of at least 90 % (wt) of substantially randomly distributed ethylene groups and propylene groups.

This very special combination of a high impact resistance, as well as a high rigidity, along with good flow properties has so far been unknown for ethylene-propylene block copolymers. Block copolymers, similar to those of the invention are known from EP-A-94818 and EP-A-77532, but these prior art copolymers do not meet the impact properties in combination with the stiffness of the block copolymers of the present invention.

The impact-resistant ethylene-propylene block copolymer according to the invention preferably contains 10$^6$ parts by weight block copolymer at least 50 parts by weight of one or more zinc and/or cadmium compounds, calculated as zinc and/or cadmium atoms. Preference is given to the presence of zinc compounds. Very suitable zinc compounds in this connection are zinc stearate and zinc hexanoate.

The invention also comprises a process for preparing an impact-resistant ethylene-propylene block copolymer (C) characterized
in that in a first polymerization step a propylene prepolymer (A) is prepared consisting of at least 98 % (wt) of propylene groups, having a melt index measured according to ASTM-D-1238 at 503 K and 21.6 N of 0.5-10 dg/min, preferably 0.5-6 dg/min,
in that in the presence of the propylene prepolymer (A) produced in the first polymerization step, ethylene and propylene are polymerized in a second polymerization step in such a manner that an ethylene-propylene block copolymer (B) is formed comprising a homopolymeric propylene part consisting of at least 98 % (wt) of propylene groups, and a copolymeric ethylene-propylene part, the weight ratio between the homopolymeric propylene part and the copolymeric ethylene-propylene part being from 4 : 1 to 9 : 1, which block copolymer (B) contains a total amount of 10-15 % (wt) ethylene groups and which has a melt index measured according to ASTM-D-1238 at 503 K and 21,6 N that is lower than the melt index measured according to ASTM-D-1238 at 503 K and 21.6 N of the propylene prepolymer and which melt index is from 0.01 to 0.8 dg/min, preferably from 0.05 to 0.5 dg/min, and
in that this ethylene-propylene block copolymer (B) is subsequently subjected to a kneading treatment consisting of one or more kneading operations, which kneading takes place in the presence of free radicals at a temperature of at least 450 K, preferably at 470-570 K. A similar treatment is known from (CA Vol 79 (1973) p. 55 no. 54505 t). However, this known treatment result in a deterioration of impact properties whereas in the special combination of polymerisation steps and treatment according to the present invention impact and stiffness properties are improved.

The kneading treatment can be effected in various ways. It implies the exertion of mechanical forces on the starting ethylene-propylene block copolymer e.g. by means of a kneading and/or transport screw of e.g. extruding or injection-moulding equipment or by means of a rolling device. Preference is given to single-screw or multi-screw kneading, which kneading operation can be repeated more than once, and in which one or more of the kneading operations can be followed by extrusion. The duration of the kneading treatment is at least 1/4 minute, particularly at least 1 minute.

If the kneading treatment consists of more than one kneading operation, there may be a longer period of time between two kneading operations. Thus in a first kneading operation a pre-product (for instance a granulate) can be prepared, subsequently be transported to another place and finally be processed in a second kneading operation according to the invention to form an end product according to the invention.

The presence of free radicals in the process according to the invention can be realized in any suitable manner. A suitable manner consists in the addition, before and/or during the said kneading treatment, of a total amount of 10-20000 parts by weight of one or more peroxides per $10^6$ parts by weight starting ethylene-propylene block copolymer to the substance or substances subjected or to be subjected to the kneading treatment. Preference is given to using peroxides having at the average temperature of a kneading operation, a half-life value less than 1/5 of the duration of the relative kneading treatment. Suitable peroxides are di-(t-butylperoxyisopropyl)-benzene, 1,1-di-t-butylperoxy-3,3,5-trimethylcyclohexane, 1,1-di-t-butylperoxycyclohexane, t-butylperoxyisopropylcarbonate, t-butylperoxybenzoate, di-cumylperoxide, di-t-butylperoxide, 2,2-di-t-butylperoxybutane, di-benzoylperoxide, 2,5-di-methylhexane-2,5-di-t-butylperoxide and 2,5-di-methylhexyn-2,5-di-t-butylperoxide.

Another suitable manner for realizing the presence of free radicals is the high-energy irradiation, for instance electron radiation or gamma radiation, of the starting ethylene-propylene block copolymer subjected or to be subjected to the kneading treatment, preferably in the almost complete absence of stabilizers, at a dose of 0.1-4 Mrad.

All kinds of combinations of the use of peroxides and of the said irradiation are suitable as well.

The kneading treatment according to the invention is preferably effected in whole or in part in the presence of at least 50 parts by weight of one or more zinc and/or cadmium compounds, calculated as zinc and/or cadmium atoms, per $10^6$ parts by weight starting ethylene-propylene block copolymer. Other additives, too, may be present or be added during this kneading treatment, for instance heat stabilizers, UV-stabilizers and nucleation agents.

Very suitable fillers for ethylene-propylene block copolymers according to the invention are chalk, with by preference an average particle size of below 2 $\mu$m, and talcum, with by preference an average particle size of below 5 $\mu$m. Suitable are quantities of filler of below 25 % (wt). A higer weight percentage of filler quickly leads to very bad mechanical properties of the copolymer-filler mixture compared with the pure copolymer.

The impact resistant ethylene-propylene block copolymers according to the invention are very suitable for use in car bumpers, so-called front ends, spoilers, so-called liners, motor car underside coats and wheel arch lining for motor cars.

The invention is further elucidated by means of the following examples and the comparative experiment.

Example I

A homopolymeric propylene prepolymer having a melt index measured according to ASTM-D-1238 at 503 K and 21.6 N of 3,0 dg/min is produced. Subsequently ethylene and propylene are polymerized in the presence of this propylene prepolymer to form a powdery starting ethylene-propylene block copolymer with a weight ratio between the homopolymeric propylene part and the copolymeric ethylene-propylene part of 22 : 5, with a total content of ethylene groups of 11 % (wt) and with a melt index measured according to ASTM-D-1238 at 503 K and 21.6 N of 0.45 dg/min. This starting ethylene-propylene block copolymer is then provided with 0,05 % (wt) zinc stearate, 0,05 % (wt) calcium stearate, 0.1 % (wt) Irganox B 225 (a trade name and trade product of Ciba-Geigy) and 0,012 % (wt) di-(t-butylperoxyisopropyl)-benzene calculated in respect of the final mixture. The starting ethylene-propylene block copolymer (B) provided with these additives is subsequently kneaded in a single-screw kneader at 513 K for 1,5 minutes and then extruded to form granulate.

This granulate has

- an Izod value measured according to ISO-R-180 at 296 K of 57.1 kJ/m$^2$,
- an E-modulus measured according to ASTM-D-790 at 296 K of 1340 N/mm$^2$, and
- a melt index measured according to ASTM-D-1238 at 503 K and 21.6 N of 3.1 dg/min.

Example II

A homopolymeric propylene prepolymer having a melt index measured according to ASTM-D-1238 at 503 K and 21.6 N of 0.63 dg/min is produced. Subsequently ethylene and propylene are polymerized in the presence of this propylene prepolymer to form a powdery starting ethylene-propylene block copolymer with a weight ratio between the homopolymeric propylene part and the copolymeric ethylene-propylene part of 22 : 4, with a total content of ethylene groups of 11 % (wt) and with a melt index measured according to ASTM-D-1238 at 503 K and 21.6 N of 0.26 dg/min. This starting ethylene-propylene block copolymer is then provided with 0.05 % (wt) zinc stearate, 0.05 % (wt) calcium stearate, 0.1 % (wt) Irganox B 225 (a trade mark and trade product of Ciba-Geigy) and 0.032 % (wt) di-(t-butylperoxyisopropyl)-benzene calculated in respect of the final mixture. The starting ethylene-propylene block copolymer provided with these additives is subsequently kneaded in a single-screw kneader at 513 K for 1.5 minutes and then extruded to form granulate.

This granulate has:

- an Izod value measured according to ISO-R-180 at 295 K of 62.0 kJ/m², 
- an E-modulus measured according to ASTM-D-790 at 296 K of 1160 N/mm², and
- a melt index measured according to ASTM-D-1238 at 503 K and 21.6 N of 3.3 dg/min.

Comparative experiment

A homopolymeric propylene prepolymer with a melt index measured according to ASTM-D-1238 at 503 K and 21.6 N of 13.6 dg/min is produced. Subsequently ethylene and propylene are polymerized in the presence of this propylene prepolymer to form a powdery starting ethylene-propylene block copolymer with a weight ratio between the homopolymeric propylene part and the copolymeric ethylene-propylene part of 49 : 10, with a total content of ethylene groups of 11 % (wt) and with a melt index measured according to ASTM-D-1238 at 503 K and 21.6 N of 2.9 dg/min. This starting ethylene-propylene block copolymer is subsequently provided with 0.05 % (wt) zinc stearate, 0.05 % (wt) calcium stearate, 0.1 % (wt) Irganox B 225 (a trade name and trade product of Ciba-Geigy) calculated in respect of the final mixture. The starting ethylene-propylene block copolymer provided with these additives (now without peroxide) is subsequently kneaded in a single-screw kneader at 513 K for 1.5 minutes and then extruded to form granulate.

This granulate has:
- an Izod value measured according to ISO-R-180 at 296 K of only 12.5 kJ/m², 
- an E-modulus measured according to ASTM-D-790 at 296 K of 1420 N/mm², and
- a melt index measured according to ASTM-D-1238 at 503 K and 21.6 N of 3.0 dg/min.

## Claims

1. Impact-resistant ethylene-propylene block copolymer (C), comprising a homopolymeric propylene part, consisting of at least 98% (wt) of propylene groups, and a copolymeric ethylene-propylene part, the weight ratio between the homopolymeric propylene part and the copolymeric ethylene-propylene part being from 4 : 1 to 9 : 1, which contains a total amount of 10-15 % (wt) ethylene groups, characterized in that its Izod value measured according to ISO-R-180 at 296 K is at least 30 kJ/m², in that its E-modulus measured according to ASTM-D-790 at 296 K is at least 1000 N/mm² and in that its melt index measured according to ASTM-D-1238 at 503 K and 21.6 N is 2.5-20 dg/min.

2. Impact-resistant ethylene-propylene block copolymer according to claim 1, characterized in that the said melt index is 2.5-8 dg/min.

3. Process for preparing an impact-resistant ethylene-propylene block copolymer (C), characterized

in that in a first polymerization step a propylene prepolymer (A) is prepared consisting of at least 98 % (wt) of propylene groups, having a melt index measured according to ASTM-D-1238 at 503 K and 21.6 N of 0.5-10 dg/min,

in that in the presence of the propylene prepolymer (A), produced in the first polymerization step ethylene and propylene are polymerized in a second polymerization step in such a manner that an ethylene-propylene block copolymer (B) is formed comprising a homopolymeric propylene part, consisting of at least 98% (wt) of propylene groups, and a copolymeric ethylene-propylene part, the weight ratio between the homopolymeric propylene part and the copolymeric ethylene-propylene part being from 4:1 to 9:1, which block copolymer (B) contains a total amount of 10-15 % (wt) ethylene groups and which has a melt index measured according to ASTM-D-1238 at 503 K and 21.6 N that is lower than the melt index measured according to ASTM-D-1238 at 503K and 21.6 N of the propylene prepolymer (A) and which melt index is from 0.01 to 0.8 dg/min, and

in that this ethylene-propylene block copolymer (B) is subsequently subjected to a kneading treatment consisting of one or more kneading operations, which kneading treatment takes place in the presence of free radicals at a temperature of at least 450 K.

4. Process according to claim 3, characterized in that in the first polymerization step a propylene prepolymer (A) is produced having a melt index of 0.5-6 dg/min measured according to ASTM-D-1238 at 503 K and 21.6 N.

5. Process according to claim 3 or 4, characterized in that in the second polymerization step a ethylene-propylene block copolymer (B) is produced having a melt index measured according to ASTM-D-1238 at 503 K and 21.6 N of 0.05-0.5 dg/min.

6. Process according to claim 3-5, characterized in that before and/or during the said kneading treatment 10-20000 parts by weight of one or more peroxides per $10^6$ parts by weight ethylene-propylene block copolymer (B), is added to the substance or substances subjected or to be subjected to the kneading treatment.

7. Process according to any one of claims 3-6, characterized in that the ethylene-propylene block copolymer (B), subjected or to be subjected to the kneading treatment, is subjected to high-energy irradiation, with a preferred irradiation dose of 0.1-4 Mrad.

8. Article wholly or partly made from an impact-resistant ethylene-propylene block copolymer (C) according to any one of claim 1 or 2.

CLAIMS FOR THE CONTRACTING STATE AT:

1. Process for preparing an impact-resistant ethylene-propylene block copolymer (C), characterized

   in that in a first polymerization step a propylene prepolymer (A) is prepared consisting of at least 98 % (wt) of propylene groups, having a melt index measured according to ASTM-D-1238 at 503 K and 21.6 N of 0.5-10 dg/min,

   in that in the presence of the propylene prepolymer (A) produced in the first polymerization step ethylene and propylene are polymerized in a second polymerization step in such a manner that an ethylene-propylene block copolymer (B) is formed comprising a homopolymeric propylene part, consisting for at least 98% (wt) of propylene groups, and a copolymeric ethylene-propylene part, the weight ratio between the homopolymeric propylene part and the copolymeric ethylene-propylene part being from 4:1 to 9:1, which block copolymer (B) contains a total amount of 10-15 % (wt) ethylene groups and which has a melt index measured according to ASTM-D-1238 at 503 K and 21.6 N that is lower than the melt index measured according to ASTM-D-1238 at 503K and 21.6 N of the propylene prepolymer (A) and which melt index is from 0.01 to 0.8 dg/min, and

   in that this ethylene-propylene block copolymer (B) is subsequently subjected to a kneading treatment consisting of one or more kneading operations, which kneading treatment takes place in the presence of free radicals at a temperature of at least 450 K.

2. Process according to claim 1, characterized in that in the first polymerization step a propylene prepolymer (A) is produced having a melt index of 0.5-6 dg/min measured according to ASTM-D-1238 at 503 K and 21.6 N.

3. Process according to claim 1 or 2, characterized in that in the second polymerization step an ethylene-propylene block copolymer (B) is produced having a melt index measured according to ASTM-D-1238 at 503 K and 21.6 N of 0.05-0.5 dg/min.

4. Process according to claim 1-3, characterized in that before and/or during the said kneading treatment 10-20000 parts by weight of one or more peroxides per $10^6$ parts by weight ethylene-propylene block copolymer (B) is added to the substance or substances subjected or to be subjected to the kneading treatment.

5. Process according to any one of claims 1-4, characterized in that the ethylene-propylene block copolymer (B) subjected or to be subjected to the kneading treatment is subjected to high-energy irradiation, with a preferred irradiation dose of 0.1-4 Mrad.

6. Impact-resistant ethylene-propylene block copolymer (C) prepared according to a process according to any one of claims 1-5.

7. Article wholly or partly made from an impact-resistant ethylene-propylene block copolymer (C) according to claim 6.

**Revendications**

1. Copolymère séquencé (c) éthylène-propylène résistant au choc, comportant une portion homopolymère de propylène, constituée d'au moins 98 % en poids de groupes propylène, et une portion copolymère éthylène-propylène, le rapport pondéral entre la portion homopolymère de propylène et la portion copolymère éthylène-propylène étant de 4 : 1 à 9 : 1, ledit copolymère séquencé contenant une quantité totale de 10 à 15 % en poids de groupes éthylène, caractérisé en ce que sa valeur Izod, mesurée selon ISO-R-180 à 296 K, est d'au moins 30 kJ/m² en ce que son module E, mesuré selon ASTM-D-790 à 296 K, est d'au moins 1000 N/mm² et en ce que son indice de fusion (melt index), mesuré selon ASTM-D-1238 à 503 K et 21,6 N, est de 2,5 à 20 dg/min.

2. Copolymère séquencé éthylène-propylène résistant au choc selon la revendication 1, caractérisé en ce que ledit indice de fusion est de 2,5 à 8 dg/min.

3. Procédé pour préparer un copolymère séquencé (C) éthylène-propylène résistant au choc, caractérisé en ce que l'on prépare, dans une première étape de polymérisation, un prépolymère de propylène (A) constitué par au moins 98 % en poids de groupes propylène, ayant un indice de fusion (melt index), mesuré selon ASTM-D-1238 à 503 K et 21,6 N, de 0,5 à 10 dg/min, en ce que l'on polymérise l'éthylène et le propylène, dans une seconde étape de polymérisation, en présence du prépolymère (A) de propylène produit dans la première étape de polymérisation, de telle sorte qu'il se forme un copolymère séquencé (B) d'éthylène et de propylène, comportant une portion homopolymère de propylène constituée par au moins 98 % en poids de groupes propylène, et une portion copolymère d'éthylène et de propylène, le rapport pondéral entre la portion homopolymère de propylène et la portion copolymère d'éthylène et de propylène étant de 4 : 1 à 9 : 1, ledit copolymère séquencé (B) contenant une quantité totale de 10 à 15 % en poids de groupes éthylène et ayant un indice de fusion (melt index), mesuré selon ASTM-D-1238 à 503 K et 21,6 N, qui est inférieur à l'indice de fusion (melt index), mesuré selon ASTM-D-1238 à 503 K et 21,6 N, du prépolymère (A) de propylène, ledit indice de fusion étant de 0,01 à 0,8 dg/min, et en ce que ce copolymère séquencé (B) éthylène-propylène est ensuite soumis à un traitement de malaxage consistant en une ou plusieurs opérations de malaxage, ledit traitement de malaxage étant réalisé en présence de radicaux libres, à une température d'au moins 450 K.

4. Procédé selon la revendication 3, caractérisé en ce que l'on produit, dans la première étape de polymérisation, un prépolymère (A) de propylène ayant un indice de fusion (melt index) de 0,5 à 6 dg/min, mesuré selon ASTM-D-1238 à 503 K et 21,6 N.

5. Procédé selon la revendication 3 ou 4, caractérisé en ce que l'on produit dans la seconde étape de polymérisation un copolymère séquencé (B) d'éthylène et de propylène ayant un indice de fusion (melt index), mesuré selon ASTM-D-1238 à 503 K et 21,6 N, de 0,05 à 0,5 dg/min.

6. Procédé selon l'une des revendications 3 à 5, caractérisé en ce que avant et/ou durant ledit traitement de malaxage l'on ajoute 10-20000 parties en poids d'un ou plusieurs peroxydes pour $10^6$ parties en poids de copolymère séquencé (B) d'éthylène et de propylène, à la substance ou aux substances soumises ou devant être soumises au traitement de malaxage.

7. procédé selon l'une quelconque des revendications 3 à 6, caractérisé en ce que le copolymère séquencé (B) éthylène-propylène, soumis ou devant être soumis au traitement de malaxage, est soumis à une irradiation à grande énergie, avec une dose d'irradiation préférée de 0,1 à 4 Mrad.

8. Article réalisé en totalité ou en partie avec un copolymère séquencé (C) éthylène-propylène résistant au choc conforme à l'une quelconque des revendications 1 ou 2.

Revendications pour l'état contractant AT

1. Procédé pour préparer un copolymère séquencé (C) éthylène-propylène résistant au choc, caractérisé en ce que l'on prépare, dans une première étape de polymérisation, un prépolymère de propylène (A) constitué par au moins 98 % en poids de groupes propylène, ayant un indice de fusion (melt index), mesuré selon ASTM-D-1238 à 503 K et 21,6 N, de 0,5 à 10 dg/min, en ce que l'on polymérise l'éthylène et le propylène, dans une seconde étape de polymérisation, en présence du prépolymère (A) de propylène produit dans la première étape de polymérisation, de telle sorte qu'il se forme un copolymère séquencé (B) d'éthylène et de propylène, comportant une portion homopolymère de propylène constituée par au moins 98 % en poids de groupes propylène, et une portion copolymère d'éthylène et de propylène, le rapport pondéral entre la portion homopolymère de propylène et la portion copolymère d'éthylène et de propylène étant de 4 : 1 à 9 : 1, ledit copolymère séquencé (B) contenant une quantité totale de 10 à 15 % en poids de groupes éthylène et ayant un indice de fusion (melt index), mesuré selon ASTM-D-1238 à 503 K et 21,6 N, qui est inférieur à l'indice de fusion (melt index), mesuré selon ASTM-D-1238 à 503 K et 21,6 N, du prépolymère (A) de propylène, ledit indice de fusion étant de 0,01 à 0,8 dg/min, et en ce que ce copolymère séquencé (B) éthylène-propylène est ensuite soumis à un traitement de malaxage consistant en une ou plusieurs opérations de malaxage, ledit traitement de malaxage étant réalisé en présence de radicaux libres, à une température d'au moins 450 K.

2. Procédé selon la revendication 1, caractérisé en ce que l'on produit, dans la première étape de polymérisation, un prépolymère (A) de propylène ayant un indice de fusion (melt index) de 0,5 à 6 dg/min, mesuré selon ASTM-D-1238 à 503 K et 21,6 N.

3. Procédé selon l'une des revendications 1 ou 2, caractérisé en ce que l'on produit dans la seconde étape de polymérisation un polymère séquencé (B) d'éthylène et de propylène ayant un indice de fusion (melt index), mesuré selon ASTM-D-1238 à 503 K et 21,6 N, de 0,05 à 0,5 dg/min.

4. Procédé selon l'une des revendications 1 à 3, caractérisé en ce que avant et/ou durant ledit traitement de malaxage l'on ajoute 10-20000 parties en poids d'un ou plusieurs peroxydes pour $10^6$ parties en poids de copolymère séquencé (B) d'éthylène et de propylène, à la substance ou aux substances soumises ou devant être soumises au traitement de malaxage.

5. Procédé selon l'une quelconque des revendications 1 à 4 , caractérisé en ce que le copolymère séquencé (B) éthylène-propylène, soumis ou devant être soumis au traitement de malaxage, est soumis à une irradiation à haute énergie, avec une dose d'irradiation préférée de 0,1 à 4 Mrad.

6. Copolymère séquencé (C) éthylène-propylène résistant au choc préparé selon un procédé conforme à l'une quelconque des revendications 1 à 5.

7. Article réalisé en totalité ou en partie à partir d'un copolymère séquencé (C) éthylène-propylène résistant au choc selon la revendication 6.

**Ansprüche**

1. Schlagfestes Äthylen-Propylenblockcopolymer (C), das einen homopolymeren Propylenteil bestehend aus mindestens 98 % (Gew.) Propylengruppen und einen copolymeren Äthylen-Propylenteil umfaßt, wobei das Gewichtsverhältnis zwischen dem homopolymeren Propylenteil und dem copolymeren Äthylen-Propylenteil 4 : 1 bis 9 : 1 beträgt, das eine Gesamtmenge von 10 bis 15 % (Gew.) Äthylengruppen enthält, dadurch gekennzeichnet, daß seine Schlagzahl, gemessen gemäß ISO-R-180 bei 296 K, mindestens 30 kJ/m² beträgt, daß sein E-Modul, gemessen gemäß ASTM-D-790 bei 296 K, mindestens 1000 N/mm² ist und

daß sein Schmelzindex, gemessen gemäß ASTM-D-1238 bei 503 K und 21,6 N, 2,5 bis 20 dag/min ist.

2. Schlagfestes Äthylen-Propylenblockcopolymer nach Anspruch 1, dadurch gekennzeichnet, daß der Schmelzindex 2,5 bis 8 dag/min beträgt.

3. Verfahren zum Herstellen eines schlagfesten Äthylen-Propylenblockcopolymers (C), dadurch gekennzeichnet,

daß in einem ersten Polymerisationsschritt ein Propylenpräpolymer hergestellt wird, das aus mindestens 98 % (Gew.) Propylengruppen besteht und einen Schmelzindex, gemessen gemäß ASTM-D-1238 bei 503 K und 21,6 N, von 0,5 bis 10 dag/min aufweist,

daß in Anwesenheit des im ersten Polymerisationsschritt hergestellten Propylenpräpolymers (A) Äthylen und Propylen in einem zweiten Polymerisationsschritt auf solche Weise polymerisiert werden, daß ein Äthylen-Propylenblockcopolymer (B) gebildet wird, das einen homopolymeren Propylenteil bestehend aus mindestens 98 % (Gew.) Propylengruppen und einen copolymeren Äthylen-Propylenteil umfaßt, wobei das Gewichtsverhältnis zwischen dem homopolymeren Propylenteil und dem copolymeren Äthylen-Propylenteil 4 : 1 bis 9 : 1 beträgt, welches Blockcopolymer (B) eine Gesamtmenge von 10 bis 15 % (Gew.) Äthylengruppen enthält und einen Schmelzindex, gemessen gemäß ASTM-D-1238 bei 503 K und 21,6 N, aufweist, der niedriger ist als der Schmelzindex, gemessen gemäß ASTM-D-1238 bei 503 K und 21,6 N des Propylenpräpolymers (A), welcher Schmelzindex 0,01 bis 0,8 dag/min beträgt, und

daß dieses Äthylen-Propylenblockcopolymer (B) anschließend einer Knetbehandlung bestehend aus einem oder mehreren Knetvorgängen unterworfen wird, welche Knetbehandlung in Anwesenheit von freien Radikalen bei einer Temperatur von mindestens 450 K erfolgt.

4. Verfahren nach Anspruch 3, dadurch gekennzeichnet, daß im ersten Polymerisationsschritt ein Propylenpräpolymer (A) mit einem Schmelzindex von 0,5 bis 6 dag/min, gemessen gemäß ASTM-D-1238 bei 503 K und 21,6 N, hergestellt wird.

5. Verfahren nach Anspruch 3 oder 4, dadurch gekennzeichnet, daß im zweiten Polymerisationsschritt ein Äthylen-Propylenblockcopolymer (B) mit einem Schmelzindex, gemessen gemäß ASTM-D-1238 bei 503 K und 21,6 N, von 0,05 bis 0,5 dag/min hergestellt wird.

6. Verfahren nach einem der Ansprüche 3 bis 5, dadurch gekennzeichnet, daß vor und/oder während der Knetbehandlung 10 bis 20 000 Gew.Teile eines oder mehrerer Peroxide pro $10^6$ Gew.Teile Äthylen-Propylenblockcopolymer (B) der Substanz oder den Substanzen, die der Knetbehandlung unterworfen werden oder unterworfen werden sollen, zugesetzt werden.

7. Verfahren nach einem der Ansprüche 3 bis 6, dadurch gekennzeichnet, daß das Äthylen-Propylenblockcopolymer (B), das der Knetbehandlung unterworfen wird oder unterworfen werden soll, Hochenergiebestrahlung mit einer bevorzugten Bestrahlungsdosis von 0,1 bis 4 Mrad ausgesetzt wird.

8. Gegenstand, der zur Gänze oder zum Teil aus einem schlagfesten Äthylen-Propylenblockcopolymer (C) nach einem der Ansprüche 1 oder 2 hergestellt ist.

Patentanspüche für den Vertragsstaat:AT

1. Verfahren zum Herstellen eines schlagfesten Äthylen-Propylenblockcopolymers (C), dadurch gekennzeichnet,

daß in einem ersten Polymerisationsschritt ein Propylenpräpolymer hergestellt wird, das aus mindestens 98 % (Gew.) Propylengruppen besteht und einen Schmelzindex, gemessen gemäß ASTM-D-1238 bei 503 K und 21,6 N, von 0,5 bis 10 dag/min aufweist,

daß in Anwesenheit des im ersten Polymerisationsschritt hergestellten Propylenpräpolymers (A) Äthylen und Propylen in einem zweiten Polymerisationsschritt auf solche Weise polymerisiert werden, daß ein Äthylen-Propylenblockcopolymer (B) gebildet wird, das einen homopolymeren Propylenteil bestehend aus mindestens 98 % (Gew.) Propylengruppen und einen copolymeren Äthylen-Propylenteil umfaßt, wobei das Gewichtsverhältnis zwischen dem homopolymeren Propylenteil und dem copolymeren Äthylen-Propylenteil 4 : 1 bis 9 : 1 beträgt, welches Blockcopolymer (B) eine Gesamtmenge von 10 bis 15 % (Gew.) Äthylengruppen enthält und einen Schmelzindex, gemessen gemäß ASTM-D-1238 bei 503 K und 21,6 N, aufweist, der niedriger ist als der Schmelzindex, gemessen gemäß ASTM-D-1238 bei 503 K und 21,6 N des Propylenpräpolymers (A), welcher Schmelzindex 0,01 bis 0,8 dag/min beträgt, und

daß dieses Äthylen-Propylenblockcopolymer (B) anschließend einer Knetbehandlung bestehend aus einem oder mehreren Knetvorgängen unterworfen wird, welche Knetbehandlung in Anwesenheit von freien Radikalen bei einer Temperatur von mindestens 450 K erfolgt.

2. Verfahren nach Anspruch 1, dadurch gekennzeichnet, daß im ersten Polymerisationsschritt ein Propylenpräpolymer (A) mit einem Schmelzindex von 0,5 bis 6 dag/min, gemessen gemäß ASTM-D-1238 bei 503 K und 21,6 N, hergestellt wird.

3. Verfahren nach Anspruch 1 oder 2, dadurch gekennzeichnet, daß im zweiten Polymerisationsschritt ein Äthylen-Propylenblock copolymer (B) mit einem Schmelzindex, gemessen gemäß ASTM-D-1238 bei 503 K und 21,6 N, von 0,05 bis 0,5 dag/min hergestellt wird.

4. Verfahren nach einem der Ansprüche 1 bis 3, dadurch gekennzeichnet, daß vor und/oder während der Knetbehandlung 10 bis 20 000 Gew.Teile eines oder mehrerer Peroxide pro $10^6$ Gew.Teile Äthylen-Propylenblockcopolymer (B) der Substanz oder den Substanzen, die der Knetbehandlung unterworfen werden oder unterworfen werden sollen, zugesetzt werden.

5. Verfahren nach einem der Ansprüche 1 bis 4, dadurch gekennzeichnet, daß das Äthylen-Propylenblockcopolymer (B), das der Knetbehandlung unterworfen wird oder unterworfen werden soll, Hochenergiebestrahlung mit einer bevorzugten Bestrahlungsdosis von 0,1 bis 4 Mrad ausgesetzt wird.

6. Schlagfestes Äthylen-Propylenblockcopolymer (C), hergestellt nach einem Verfahren nach einem der Ansprüche 1 bis 5.

7. Gegenstand, der zur Gänze oder zum Teil aus einem schlagfesten Äthylen-Propylenblockcopolymer (C) nach Anspruch 6 hergestellt ist.